# DEMANDE DE BREVET EUROPEEN

(11) **EP 3 633 555 A1**
(43) Date de publication de la demande: **08.04.2020**
(21) Numéro de dépôt: 18198371.9
(22) Date de dépôt: 02.10.2018
(51) Int. Cl.: G06K 19/077

(54) **PROCÉDÉ DE FABRICATION D'UNE CARTE ANTI-ESD COMPORTANT UNE FEUILLE CONDUCTRICE DE COURANT**

(71) Demandeur: Thales Dis France SA, 92190 Meudon (FR)
(72) Inventeur: ANSALDI, Laurence, 13881 Cedex Gémenos (FR); DHERS, Gilles, 13881 Cedex Gémenos (FR); TIBILETTI, Lucie, 13881 Cedex Gémenos (FR); VIALARD, Camille, 13881 Cedex Gémenos (FR); BRAITHWAITE, Grégory, 13881 Cedex Gémenos (FR)
(74) Mandataire: Milharo, Emilien

(57) **Abrégé**

L'invention concerne un procédé de fabrication d'une carte à puce anti-ESD comportant une feuille (4) conductrice de courant, ledit procédé comportant une étape (110) de réalisation de motifs graphiques (11, 29G) ; Le procédé se caractérise en ce qu'il comprend une étape de formation de ladite feuille conductrice (4) en plusieurs zones discontinues ou isolées électriquement.

L'invention concerne également la carte obtenue.

## Description

Procédé de fabrication d'une carte anti-ESD comportant une feuille conductrice de courant.

### Domaine de l'invention.

L'invention concerne un procédé de fabrication de support de type carte comportant une feuille conductrice de courant.

Les cartes à feuille conductrice de courant comprennent généralement une fine couche ou feuille de métal (électriquement conductrice) qui s'étend sur une surface principale de la carte.

L'invention concerne plus particulièrement des cartes qui soient anti-décharge de courant électrostatique (anti-ESD).

L'invention concerne particulièrement les cartes de transaction ou des cartes à puce de circuit intégré à contacts électriques ; mais elle peut concerner notamment d'autres supports électroniques tels que des passeports électroniques, des cartes sans-contact ou cartes hybrides, des tickets ou étiquettes radiofréquences, des transpondeurs radiofréquences, des inserts (ou inlay) intégrant ou constituant un tel module.

De tels objets peuvent être conformes notamment au(x) standard(s) ISO 78016 et/ou ISO / IEC 14443.

### Art antérieur.

L'homme de l'art connaît l'existence de phénomènes de décharge électrostatique (ESD) dans les cartes à puce qui peuvent être à l'origine d'endommagement de la puce électronique.

Par ailleurs, le brevet EP1994489 (B1) décrit une carte à puce ayant une couche métallique sur un isolant et qui est protégée contre les ESD. Dans un mode de réalisation, la résistance électrique de la couche métallique est augmentée en perturbant la trajectoire conductrice des charges électriques. Des sauts physiques sont introduits dans la couche métallique soit en enlevant des portions de métal, soit par application sélective de couche conductrice.

### Problème technique.

Les inventeurs ont constaté que des terminaux bancaires à peuvent être curieusement endommagés électriquement.

Ils ont constaté que l'origine du problème des terminaux peut provenir des décharges électrostatiques de nouvelles cartes à puce à feuille conductrice (ou métallique), introduites récemment à plus grande échelle sur le marché.

En effet, une carte peut recevoir des charges électrostatiques provenant d'un utilisateur notamment lorsque la carte vient à être introduite dans un terminal bancaire. Et une carte à feuille conductrice peut facilement conduire ces charges électrostatiques d'un de ses côtés à un autre par un phénomène de décharge électrostatique (ESD) via la feuille conductrice. Ces charges électrostatiques déchargées (ESD) peuvent accessoirement aussi endommager la puce de la carte.

### Résumé de l'invention.

L'invention a pour objectif de résoudre le problème d'endommagement des terminaux bancaires apporté par les cartes à feuille conductrice en concevant une carte à puce anti-ESD de manière économique et avec le moins d'étape possible.

Elle vise aussi à éviter les ESD sur les cartes de transaction notamment à puce électronique afin de ne pas endommager la puce électronique.

L'invention consiste à effectuer une ablation partielle de la feuille conductrice de courant, au moins par zone, notamment à l'aide d'un laser, pour d'empêcher de transmettre les charges (ESD) d'un côté de la carte au côté opposé, via la feuille conductrice de courant.

Préférentiellement, l'invention prévoit de faire coïncider partiellement ou en totalité, au moins une ligne ou zone d'ablation laser avec une ligne ou zone de personnalisation graphique pour économiser une étape : cela évite de faire passer le laser deux fois au moins sur certains endroits de la carte, une première fois pour la personnalisation graphique et ensuite également une seconde fois pour l'ablation de la feuille conductrice afin d'empêcher des décharge (ESD).

La puissance du laser peut être réglée pour éviter d'endommager la couche plastique en-dessous de la feuille conductrice ou métallique.

A cet effet, l'invention a pour objet un procédé de fabrication d'une carte à puce anti-ESD comportant une feuille conductrice de courant, ledit procédé comportant une étape de réalisation de motifs graphiques ; Le procédé est caractérisé en ce qu'il comprend une étape de formation de ladite feuille conductrice en plusieurs zones discontinues ou isolées électriquement.

Selon d'autres caractéristiques du procédé :
- La formation de zones conductrices indépendantes ou isolées électriquement les unes des autres de la couche conductrices s'effectue par découpe ou ablation laser de la couche conductrice ;
- La découpe ou ablation laser s'effectue de préférence en coïncidence au moins partielle avec le contour du motif ou en parallèle avec au moins des portions de contour du motif ;

- Le motif graphique est effectué par laser et au moins une zone ou ligne du motif coïncide avec ledit motif graphique ;
- Le motif graphique est réalisé par ajout de matière ou par impression graphique et la découpe laser réalise des zones ou lignes qui correspondent respectivement à des zones ou lignes d'au moins un motif graphique de personnalisation ;
- Alternativement, il n'est pas exclu que la couche conductrice soit formée par dépôt de zones discontinues ou isolées électriquement les unes des autres.

L'invention a également pour objet une carte à puce anti-ESD comportant une feuille conductrice de courant, ledit procédé comportant une étape de réalisation de motifs graphiques ; la carte est caractérisée en ce que ladite feuille conductrice est formée de plusieurs zones conductrices discontinues ou isolées électriquement.

La carte peut constituer ou faire partie également d'un passeport, d'un livret, d'une feuille, d'une couverture de passeport.

### Brève description des figures.

- La figure 1 illustre schématiquement en coupe transversale une carte de transaction (bancaire, fidélité, d'accès, d'identification) obtenue selon un principe de mise en oeuvre du procédé de l'invention ;
- La figure 2 illustre une carte obtenue selon un premier mode de mise en oeuvre du procédé de l'invention ;
- La figure 3 illustre une carte obtenue selon un second mode de mise en oeuvre du procédé de l'invention ;
- La figure 4 illustre des étapes de mise en oeuvre du procédé de l'invention.

### Description.

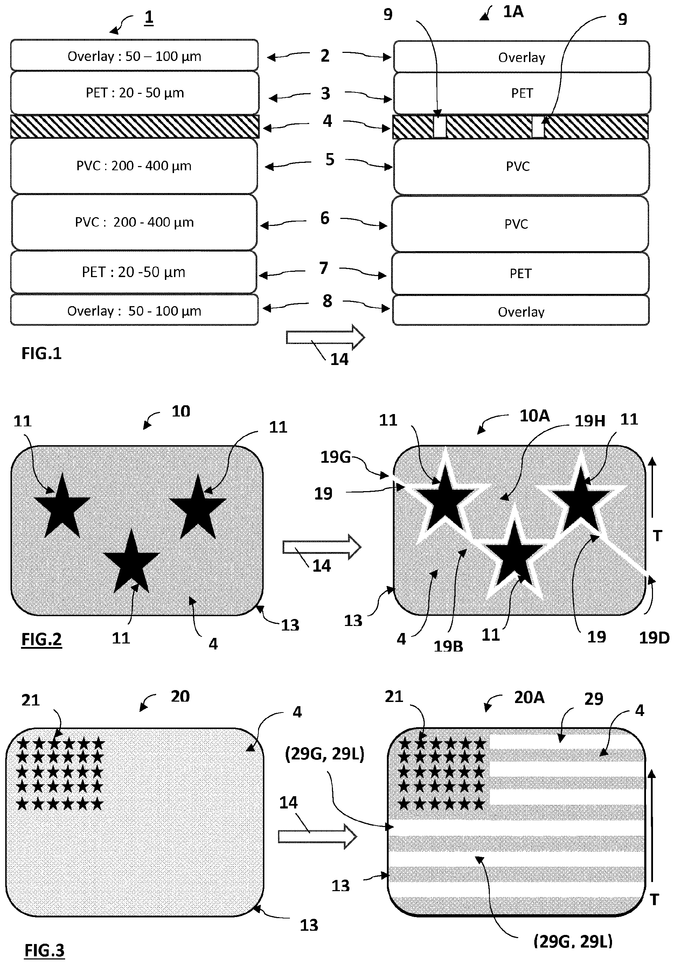

La figure 1 illustre une carte de transaction anti-ESD (bancaire, fidélité, d'accès, d'identification) obtenue selon un principe de mise en oeuvre du procédé de fabrication de l'invention. La carte peut comporter ou pas une puce électronique.

La carte comprend un corps de carte 1, 1A en matière isolante et ce corps comporte une feuille conductrice de courant 4.

Le corps est ici composé de plusieurs couches de matières plastiques laminées ou stratifiées ensemble. La carte comprend deux couches centrales 5, 6 en PVC, recouvertes de couches de PET transparentes ou translucides 3, 7, elles-mêmes recouvertes d'un film ou couche de couverture (overlay) transparent 2, 8.

La feuille conductrice est ici une feuille métallique 4 disposée entre la couche de PVC 5 et la couche de PET transparente 3. La feuille métallique peut être disposée sous un film de couverture transparent ou translucide ou sous une ou plusieurs couches transparentes.

Les épaisseurs des différentes couches sont indiquées dans chaque couche à titre d'exemple.

Le procédé met en oeuvre une étape de réalisation (flèche 14) d'au moins un motif graphique de personnalisation 9 ; Le motif 9 peut être réalisé dans ou sur une des couches dès l'instant qu'il est visible de l'extérieur de la carte. Le motif peut être réalisé directement sur une couche ou à travers des couches transparentes notamment par faisceau laser.

Selon une caractéristique du mode préféré, le procédé comprend une étape de découpe laser de la feuille métallique en coïncidence au moins partielle avec une zone ou ligne géométrique formant le motif ou en parallèle avec au moins une zone ou ligne géométrique formant le motif.

Dans l'exemple fig. 1, la carte 1 est soumise à un traitement laser 14 pour obtenir la carte 1A dans laquelle des zones ou lignes 9 ont été formées dans la couche métallique 4. Le laser traverse les couches 2 et 3 pour effectuer une ablation ciblée de la couche métallique sur toute son épaisseur.

A la figure 2, est illustré un premier mode de mise en oeuvre du procédé avec un premier exemple. Une carte 10 est obtenue avec trois motifs 11 de personnalisation graphique, chacun en forme d'étoile. Les motifs 11 peuvent être déposés par impression graphique, notamment par jet d'encre, juste au-dessus de la feuille (ou couche) 3 de PET et sous la couche de recouvrement externe (overlay 2).

Le motif graphique 11 peut être fixé au-dessus ou au-dessous du film de couverture 2 (overlay) ou de l'une des couches transparentes PET 3 ou overlay 2.

La couche de recouvrement 2 peut être laminée ensuite pardessus l'impression graphique. Alternativement, l'impression peut être effectuée sur la couche de recouvrement 2 (sur sa face arrière) avant d'être fixée sur les autres feuilles du corps de carte.

La feuille métallique 4 s'étend ici sur toute la surface du corps de carte. Elle s'étend jusqu'au bord périphérique 13 de la carte. La couche métallique peut être toutefois, légèrement en retrait du bord, par exemple de quelques dixièmes de millimètres à 1 cm.

Le traitement laser 14 forme des zones ou des lignes 19 qui coïncident ou sont parallèles avec le contour des motifs 11 en forme d'étoile. Les lignes 19 forment ici un second contour des étoiles qui est parallèle au contour graphique imprimé de l'étoile 11. Les lignes de découpe / ou d'ablation laser 19 s'étendent en continuité d'un bord latéral de la carte au bord latéral opposé jusqu'à déboucher au niveau des bords de la carte en des points 19G à gauche et 19D (à droite sur la figure 2). La feuille métallique est ainsi séparée en deux zones 19H et 19B. Ainsi les charges électriques ne peuvent pas circuler aisément notamment dans le sens transversal T de la carte de la zone 19B jusqu'à la zone 19H. La feuille métallique peut ne pas être sectionnée totalement sur son épaisseur. Dans ce cas, on obtient quand même une augmentation de la résistance électrique de la carte dans le sens transversal T.

L'invention prévoit d'orienter la résistance électrique de la carte également dans le sens longitudinal de la carte par des coupures ou discontinuités de la couche métallique 4 s'étendant d'un bord transversal au bord opposé.

Selon une caractéristique, le motif graphique est réalisé par ajout de matière ou par impression graphique et la découpe laser réalise des zones ou lignes correspondant respectivement à des zones ou lignes d'au moins un motif graphique de personnalisation.

La découpe laser participe également à la réalisation du motif graphique. Ici, les étoiles sont mises en valeur par un contour supplémentaire 19 des étoiles réalisé par découpe au laser et qui contraste avec le contour des étoiles 11.

Selon une autre caractéristique du procédé, le motif graphique est effectué par laser et au moins une zone ou ligne du motif coïncide avec ledit motif graphique.

Cette caractéristique est expliquée en relation avec la figure 3.

A la figure 3, la carte 20 comporte un motif graphique 21 composé de plusieurs étoiles ; Le motif 21 est imprimé sur une des couches du corps de carte de manière à former un drapeau américain. La couche métallique 4 est disposée sous le motif à étoiles 21.

Par la suite, le procédé comprend une étape de formation de lignes ou bandes parallèles 29 dans la couche métallique 4 par découpe ou ablation laser. Ces lignes ou bandes 29 forment une personnalisation graphique obtenue par laser. Par la même occasion ou avantageusement, ces lignes ou bandes 29 de découpe ou d'ablation laser coïncident avec des portions ou des motifs graphiques du drapeau américain (constitués par des bandes horizontales du drapeau américain).

Ainsi, avantageusement tout ou partie de la personnalisation graphique par laser 29 peut servir aussi à découpler électriquement (dans le sens transversal T de la carte) des zones de la couche métallique. Il est donc inutile de réaliser une impression graphique à certains endroits traités par laser (les bandes blanches du drapeau américain sont réalisées par laser et non pas besoin d'être imprimées par sérigraphie ou jet d'encre notamment).

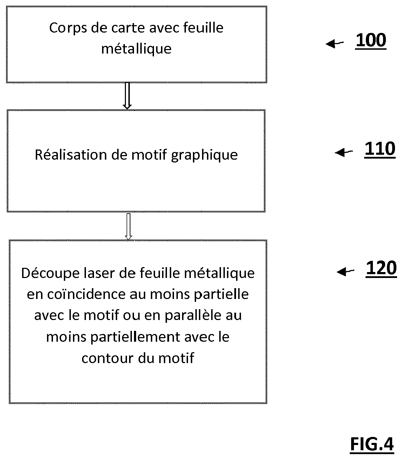

A la figure 4 sont illustrés des étapes du procédé de l'invention présentées ci-après.
- A l'étape 100, un corps de carte avec une feuille métallique 4 est fournie ;
- A l'étape 110, on réalise une personnalisation graphique ou le motif graphique 11, 21(impression et/ou gravure / ablation / découpe laser) sur la carte. Cependant tout type de personnalisation peut être envisagé (Embossage, dépôt d'hologramme, marquage par transfert thermique, ajout de matière sur la carte) ;
- A l'étape 120, le procédé comprend une étape de découpe / ablation / gravure laser de zones ou lignes correspondant à des zones ou lignes 29L d'au moins un motif graphique de personnalisation 29G. La découpe ou traitement laser 29L de feuille métallique peut être effectué en coïncidence au moins partielle avec le motif 29G ou effectué au moins partiellement en parallèle avec le contour du motif graphique 11 (cas de l'étoile fig. 2) ou de personnalisation.

Dans le cas où la carte comprend une puce électronique, des motifs de découpe laser dans la feuille métalliques peuvent également contribuer à protéger la puce de décharge électrique ESD.

Sur le plan pratique pour les cartes avec module de circuit intégré, le procédé de l'invention peut comprendre les étapes suivantes.
- 1) Conception de la carte au niveau du studio de conception (conception du design ou du motif à imprimer + réalisation des motifs comprenant des lignes ou zones à effectuer par ablation ou découpe laser) ;
- 2) Impression des feuilles centrales (comme pour les cartes standards) ;
- 3) Lamination et poinçonnage (extraction par découpe) des structures de corps de carte (comme pour les cartes standards) ;
- 4) Fraisage de la cavité de module et encartage du module (comme pour les cartes standards) ;
- 5) Gravure au laser des cartes suivant le design ou motif défini à l'étape 1.

Alternativement, l'invention peut prévoir de former la couche conductrice 4 non pas par laser une fois la carte finie mais par dépôt ou formation directement de zones discontinues ou isolées électriquement les unes des autres. Par exemple, une feuille métallique peut être gravée chimiquement avec des zones conductrices isolées ou séparées les unes des autres une fois qu'elle a été reportée ou collée sur un assemblage de feuilles composant une carte. La feuille conductrice (notamment métallique, en carbone...) comportant des zones discontinues ou isolées électriquement, peut être formée provisoirement sur un film transfert amovible avec des zones discontinues puis déposée par transfert à chaud sur d'autres couches ou feuilles entrant dans la composition de la structure de la carte.

Ainsi, l'invention permet de résoudre le problème majeur des dégâts électriques des terminaux en fournissant des cartes à feuille conductrice dont la feuille conductrice est formée de plusieurs zones ou portions conductrices isolées les unes des autres.

Avantageusement, le procédé de formation des zones isolées électriquement s'effectue par laser après la fabrication de la carte. Le laser permet d'effectuer un traitement final à la carte (ou autre support) selon qu'il y aurait ou pas une utilisation en relation avec des terminaux bancaires ou pour des marchés différents. Il apporte ainsi une souplesse de traitement dans la fabrication des supports à puce électroniques comportant une feuille conductrice.

Le traitement laser permet de personnaliser graphiquement les cartes et en même temps d'effectuer un découplage électrique dans les zones voulues de la couche électrique.

## Revendications

1. Procédé de fabrication d'une carte à puce anti-ESD comportant une feuille (4) conductrice de courant, ledit procédé comportant une étape (110) de réalisation de motifs graphiques (11, 29G),
**caractérisé en ce qu'**il comprend une étape de formation de ladite feuille conductrice (4) en plusieurs zones discontinues ou isolées électriquement.

2. Procédé selon la revendication précédente, **caractérisé en ce que** ladite formation s'effectue par découpe ou ablation laser (9, 19, 29L).

3. Procédé selon la revendication précédente, **caractérisé en ce que** ladite découpe ou ablation laser s'effectue en coïncidence au moins partielle avec le contour du motif (29G) ou en parallèle avec au moins des portions de contour du motif (11).

4. Procédé selon l'une des revendications 2 à 3, **caractérisé en ce que** la feuille conductrice (4) est disposée sous un film de couverture (2, 3) transparent ou translucide et **en ce que** ladite découpe laser (9, 19, 29L) s'effectue à travers ledit film de couverture (2, 3).

5. Procédé selon l'une quelconque des revendications précédente, **caractérisé en ce que** le motif graphique (11) est fixé dessus ou dessous le film de couverture (4).

6. Procédé selon l'une quelconque des revendications 2 à 5, **caractérisé en ce que** le motif graphique (29G) est effectué par laser et au moins une zone ou ligne du motif graphique (29G) coïncide avec une portion de motif laser (29L) réalisée par laser.

7. Procédé selon l'une quelconque des revendications 2 à 6, **caractérisé en ce que** le motif graphique (11, 21) est réalisé par ajout de matière ou par impression graphique et la découpe laser (19) réalise des zones ou lignes correspondants ou parallèles à des zones ou lignes d'au moins un motif graphique de personnalisation (11).

8. Procédé selon la revendication 1, **caractérisé en ce que** la couche conductrice est formée par dépôt de zones discontinues ou isolées électriquement les unes des autres.

9. Carte à puce anti-ESD comportant une feuille (4) conductrice de courant, ledit procédé comportant une étape (110) de réalisation de motifs graphiques (11, 29G), **caractérisée en ce que** ladite feuille conductrice (4) est formée de plusieurs zones conductrices discontinues ou isolées électriquement.

10. Carte anti-ESD selon la revendication précédente, **caractérisée en ce qu'**elle comprend une découpe ou ablation (9, 19, 29L) de ladite feuille conductrice (4) en coïncidence au moins partielle avec le contour du motif (29G) ou en parallèle avec au moins des portions de contour du motif (11).
